# EUROPEAN PATENT APPLICATION

(11) **EP 4 275 831 A1**
(43) Date of publication of application: **15.11.2023**
(21) Application number: 23173112.6
(22) Date of filing: 12.05.2023
(51) Int. Cl.: B23K 26/22, B23K 26/244, B23K 101/38

(54) **ELECTRODE TAB WELDING METHOD AND SECONDARY BATTERY INCLUDING ELECTRODE ASSEMBLY**

(30) Priority: 13.05.2022 KR 20220058806
(71) Applicant: SK On Co., Ltd., Seoul 03161 (KR)
(72) Inventor: OH, Young Rae, 34124 Daejeon (KR); RYU, Jae Min, 34124 Daejeon (KR); PARK, Sang Jun, 34124 Daejeon (KR); AHN, Ji Eun, 34124 Daejeon (KR)
(74) Representative: Bird & Bird LLP

(57) **Abstract**

Provided is an electrode tab welding method including: aligning one end portion of an electrode tab unit including a plurality of electrode tabs protruding from one side or both sides of an electrode assembly in which electrodes and separators are stacked to overlap one end portion of an electrode lead; and irradiating an overlapping area where the electrode tab unit and the electrode lead overlap each other with a laser for welding, wherein each of the electrode tabs belonging to the electrode tab unit is an ultra-thin electrode tab having a thickness of 15 µm or less, and the number of electrode tabs stacked in one direction in the electrode tab unit is at least 40.

## Description

### BACKGROUND

In various electronic devices such as mobile phones, notebook computers, and wearable devices, the demand for secondary batteries that are thinner and lighter while having higher energy density is increasing.

In this regard, together with a material approach taken by developing an active material having high energy density, a structural approach is taken by increasing the number of stacks using thinner electrode tabs in a stack type electrode assembly where unit cells including a positive electrode, a separator, and a negative electrode are sequentially stacked or in a jelly-roll type electrode assembly where long sheet-type positive and negative electrodes are wound in a dense state.

As the electrode tabs have become thinner, ultrasonic welding, which is commonly used to weld conventional electrode tabs, has the risk of damage to not only the electrode tabs but also the unit cells in the welding process. To solve this problem, it has been proposed to weld electrode tabs and an electrode lead to each other using laser welding instead of the ultrasonic welding.

However, as electrode tabs are ultra-thin, up to about 10 µm, and the number of stacked ultra-thin electrode tabs increases, it is difficult to uniformly and stably fuse the electrode tabs to the electrode lead. In addition, stress generated inside/outside the electrode assembly increases the deformation and deterioration of the electrode tab including a welded portion, resulting in a reduction in battery performance and a decrease in battery safety.

The following invention relates to an electrode tab welding method, and more particularly, to an electrode tab welding method capable of stably coupling ultra-thin electrode tabs and an electrode lead to each other for a long period of time.

The above problems may be solved because even when ultra-thin electrode tabs are highly stacked, damage to the electrode tabs may be prevented and welding may be performed in a state where the electrode tabs are stably and firmly coupled to the electrode lead. Also, it is possible to effectively prevent a welded portion and electrode tabs adjacent to the welded portion from being damaged or deteriorating due to stress applied inside and outside the battery cell in which the electrode assembly is provided.

### SUMMARY

An embodiment is directed to providing a method for welding ultra-thin electrode tabs included in an electrode assembly to an electrode lead.

Another embodiment of is directed to providing a method for welding ultra-thin electrode tabs to an electrode lead in a stable manner against stress generated or applied inside/outside an electrode assembly.

In one general aspect, an electrode tab welding method includes: aligning one end portion of an electrode tab unit including a plurality of electrode tabs protruding from one side or both sides of an electrode assembly in which electrodes and separators are stacked to overlap one end portion of an electrode lead; and irradiating an overlapping area where the electrode tab unit and the electrode lead overlap each other with a laser for welding, wherein each of the electrode tabs belonging to the electrode tab unit is an ultra-thin electrode tab having a thickness of 15 µm or less, and the number of electrode tabs stacked in one direction in the electrode tab unit is at least 40.

The laser may be a diode-pumped solid-state laser.

The overlapping area may be irradiated with the laser to form a welding pattern in which welding spots are regularly spaced apart from each other on an uppermost plane that is a laser incident plane of the overlapping area.

In the welding pattern, a first welding spot density defined by the number of welding spots per unit length in a length direction may be greater than a second welding spot density defined by the number of welding spots per unit length in a width direction, the length direction being a direction in which the electrode tabs protrude and the width direction being a direction perpendicular to the length direction.

The first welding spot density may be 0.6 to 0.8 pieces/mm, and the second welding spot density may be 0.3 to 0.5 pieces/mm.

Each of the welding spots may have a diameter of 0.2 mm to 0.8 mm on the uppermost plane that is a laser irradiated plane (a plane on which the laser is incident) of the overlapping area, and have a diameter of 0.1 to 0.8 mm on a lowermost plane that is a plane opposite to the plane of the electrode lead contacting the electrode tab unit.

The electrode tab unit may overlap the electrode lead in such a manner that the electrode tab unit is positioned on the electrode lead, so as to apply the laser from above.

A mask with slits formed therein may be positioned above and spaced apart from the overlapping area, so as to apply the laser from above.

The electrode tabs and the electrode lead may be each independently copper or aluminum.

An electrode assembly including an electrode lead welded to an electrode tab unit by the above-describing electrode tab welding method is included.

In another general aspect, a secondary battery includes: an electrode assembly in which electrodes and separators are stacked; an electrode tab unit including a plurality of electrode tabs protruding from one side or both sides of the electrode assembly, with end portions of the electrode tabs being tightly coupled to each other to form a tab bundle; an electrode lead connected to the electrode tab unit by laser welding; and a battery case, wherein each of the electrode tabs belonging to the electrode tab unit is an ultra-thin electrode tab having a thickness(average thickness) of 15 µm or less, and the number of electrode tabs tightly coupled to each other in the tab bundle is at least 40.

The connection between the electrode tab unit and the electrode lead may be made by a welding pattern formed by laser welding in an overlapping area where the electrode tab unit and the electrode lead overlap each other, and the welding pattern may be a spot-type pattern in which welding spots are regularly spaced apart from each other on an uppermost plane that is a laser incident plane of the overlapping area.

In the welding pattern, a first welding spot density defined by the number of welding spots per unit length in a length direction may be greater than a second welding spot density defined by the number of welding spots per unit length in a width direction, the length direction being a direction in which the electrode tabs protrude and the width direction being a direction perpendicular to the length direction.

The first welding spot density may be 0.6 to 0.8 pieces/mm, and the second welding spot density may be 0.3 to 0.5 pieces/mm.

Each of the welding spots may have a diameter of 0.2 mm to 0.8 mm on the uppermost plane, and have a diameter of 0.1 to 0.8 mm on a lowermost plane that is an opposite plane of the uppermost plane in the overlapping area.

The electrode lead may be positioned under the electrode tab unit in the overlapping area, so as to apply a laser from above.

The electrode tab welding method according to embodiments is advantageous in that: even when ultra-thin electrode tabs are highly stacked, damage to the electrode tabs can be prevented and welding can be performed in a state where the electrode tabs are stably and firmly coupled to the electrode lead; and it is possible to effectively prevent a welded portion and electrode tabs adjacent to the welded portion from being damaged or deteriorating due to stress applied inside and outside the battery cell in which the electrode assembly is provided.

### BRIEF DESCRIPTION OF THE DRAWINGS

FIG. 1 illustrates a process diagram of a welding method according to an embodiment.
FIG. 2 illustrates an example of a welding pattern in an overlapping area in the welding method according to an embodiment.
FIG. 3 illustrates another example of a welding pattern in the overlapping area in the welding method according to an embodiment.
FIG. 4 illustrates another example of a welding pattern in the overlapping area in the welding method according to an embodiment.
FIG. 5 illustrates another process diagram of a welding method together with a mask according to an embodiment.
FIG. 6 illustrates an example of a cross section of an electrode assembly including an electrode lead welded to an electrode tab unit in a secondary battery according to an embodiment.
FIG. 7 illustrates a perspective view of the secondary battery according to an embodiment.

### DETAILED DESCRIPTION OF EMBODIMENTS

Hereinafter, an electrode tab welding method will be described in detail. Technical terms and scientific terms used herein have the general meaning understood by those skilled in the art to which idea of invention pertains unless otherwise defined, and a description for the known function and configuration may be omitted in the following description and the accompanying drawings.

In addition, the singular forms used in the specification and the appended claims may be intended to include plural forms as well, unless the context indicates otherwise.

In the specification and the appended claims, terms "first", "second", and the like are used for the purpose of distinguishing one component from another component, not in a limiting sense.

In the specification and the appended claims, terms "include", "have", and the like specify the presence of features or components described in the specification, but do not preclude the presence or addition of one or more other features or components unless stated otherwise.

In the specification and the appended claims, when a part such as a film (layer), an area, or a component is mentioned as being positioned "above" or "on" another part, this includes not only a case where the parts are in direct contact with each other but also a case where another film (layer), another area, another component, or the like is interposed therebetween.

An electrode tab welding method according to an embodiment includes: aligning one end portion of an electrode tab unit including a plurality of electrode tabs protruding from one side or both sides of an electrode assembly in which electrodes and separators are stacked to overlap one end portion of an electrode lead; and irradiating an overlapping area where the electrode tab unit and the electrode lead overlap each other with a laser for welding, wherein each of the electrode tabs belonging to the electrode tab unit is an ultra-thin electrode tab having a thickness of 15 µm or less, and the number of electrode tabs stacked in one direction in the electrode tab unit is at least 40.

In an embodiment, the thickness of each of the electrode tabs belonging to the electrode tab unit may be 15 µm or less, 13 µm or less, 10 µm or less, 9 µm or less, 8 µm or less, 7 µm or less, or 6 µm or less, and may be substantially 5 µm or more.

In an embodiment, the number of electrode tabs stacked in one direction in the electrode tab unit may be 40 or more, 50 or more, 60 or more, 70 or more, 80 or more, 90 or more, 100 or more, 110 or more, or 120 or more, and may be substantially 200 or less, but is not limited thereto.

In an advantageous example, the laser may be a diode-pumped solid-state laser (disk laser). In a case where a large number of ultra-thin electrode tabs are highly stacked, in order to fuse (bond) the electrode tab unit and the electrode lead to each other in a strong and stable manner and to suppress deformation and deterioration (damage) caused due to internal/external stress, it is advantageous to perform welding in the form of very fine spots, and it is also advantageous to form the welding spots at a high density.

The diode-pumped solid-state laser, which does not cause a lens effect, is capable of generating a laser beam having perfectly collimated light, with extremely excellent light condensation and high output. Thus, the diode-pumped solid-state laser is advantageous in that fine and homogeneous welding spots can be formed, the size and arrangement of the welding spots can be precisely controlled as designed, and thermal deformation or the like can be minimized while the welding spots can be formed at a high density. In this case, the laser light of the diode-pumped solid-state laser may be near-infrared light, but is not limited thereto.

The electrode assembly, which is formed by stacking electrodes and separators, may be embedded in a battery case together with an electrolyte to form a battery cell (secondary battery). In this case, the electrodes may be positive electrodes or negative electrodes, and electrode tabs coupled to the positive electrodes may be collectively referred to as positive electrode tabs, and electrode tabs coupled to the negative electrodes may be collectively referred to as negative electrode tabs. In addition, electrode leads coupled to the positive electrode tabs by welding may be collectively referred to as positive electrode leads, and electrode leads coupled to the negative electrode tabs by welding may be collectively referred to as negative electrode leads. Thus, the electrode tabs and the electrode leads refer to electrode tabs and electrode leads having the same polarity, and may be positive electrode tabs and positive electrode leads or may be negative electrode tabs and negative electrode leads. Since the positive electrode tab and the negative electrode tab, and the positive electrode lead and the negative electrode lead can be identically explained, the terms "electrode tab" and "electrode lead" will be used below without distinguishing them from each other.

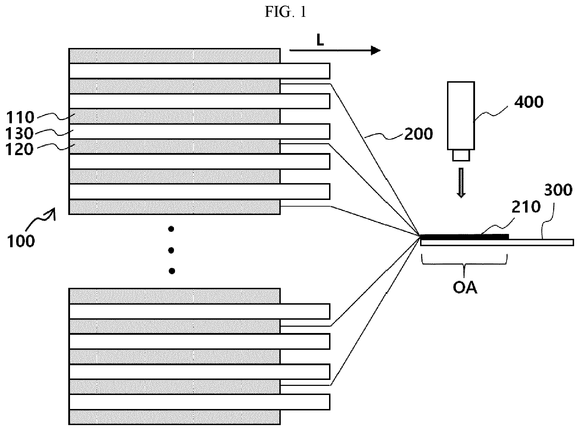

FIG. 1 is a process diagram illustrating a process of welding electrode tabs of an electrode assembly according to an embodiment. As in the example illustrated in FIG. 1, an electrode assembly 100 may include two types of electrodes, i.e., a positive electrode 110 and a negative electrode 120, and a separator 130 interposed between the electrodes to insulate the adjacent electrodes from each other. The electrode assembly 100 may be an assembly in which a plurality of electrodes 110 and 120 and separators 130 are stacked in such a manner that the electrodes having different polarities face each other with the separator 130 interposed therebetween. The electrode assembly may have a stack, stack-folding, lamination-stack, or jelly roll structure, but is not limited thereto.

Each of the two types of electrodes having different polarities, i.e., the positive electrode and the negative electrode, may have a structure in which an active material layer (a positive electrode active material layer or a negative electrode active material layer) is laminated on one or both surfaces of an electrode current collector (a positive electrode current collector or a negative electrode current collector). The current collector may be in the form of a metal foil or metal mesh including aluminum or copper.

The electrode assembly 100 may include electrode tabs 200 each connected to the electrode 110 or 120 of the electrode assembly 100 and protruding from the outer periphery of the electrode on one side or both sides thereof. The electrode tab 200 may be formed by cutting one end portion (uncoated portion) of the electrode current collector on which the active material is not applied, or may be formed by connecting a separate foil-type conductive member to the uncoated portion.

As in the example shown in FIG. 1, the electrode tabs 200 of the electrodes 110 and 120 may protrude side by side in the same direction from one side of the electrode assembly 100, but are not limited thereto and may protrude in different directions. Specifically, electrode tabs having the same first polarity (e.g., +) among the electrode tabs may protrude in the same direction from the same location (based on a projection image when the electrode tabs are looked down in the stacking direction). Electrode tabs having a second polarity (e.g., -) different from the first polarity may protrude in another direction from a location different from the location where the electrode tabs having the first polarity protrude. That is, when the electrode tabs protrude in different directions (e.g., both sides of the electrode assembly), electrode tabs having the same polarity may protrude side by side in one of the different directions. However, the electrode tabs are not limited thereto, and the electrode tabs having different polarities of the electrodes may protrude in the same direction from different locations (outer peripheral locations of the electrodes), or protrude in different directions from different locations (outer peripheral locations of the electrodes).

The electrode tab 200 serves to electrically connect the outside and the inside of the electrode assembly 100 to each other, and the electrode tab 200 may be connected to an electrode lead 300 electrically connecting the electrode assembly to the outside of the battery cell. That is, one end of the electrode lead may be connected to the electrode tab, and the other end of the electrode lead may protrude out of a battery case when the electrode assembly is sealed by the battery case. At this time, the positive electrode tab may be connected to a positive electrode lead, and the negative electrode tab may be connected to a negative electrode lead. The material of the electrode lead may be the same as or different from the material of the electrode tab to be coupled, and the electrode lead may substantially be formed of copper, aluminum, nickel-coated copper, or the like.

The electrode tab unit including a plurality of electrode tabs 200 protruding side by side may overlap one end portion of the electrode lead 300 in a state a tab bundle 210 is formed by tightly coupling at least end portions of the electrode tabs 200 to each other using a pressure fixing member such as a jig. In addition, after the electrode tabs are tightly coupled to each other by the pressure fixing member, the electrode tabs may be aligned to overlap one end portion of the electrode lead 300 after one end portion of the tab bundle 210 may be cut out so that the electrode tabs constituting the tab bundle have the same length.

The alignment makes it possible to perform welding by irradiating the overlapping area OA formed by the electrode tab unit and the electrode lead overlapping each other with laser light generated from a laser, advantageously a diode-pumped solid-state laser 400. Accordingly, a welding area where the electrode tab unit and the electrode lead are welded to each other may correspond to or be included in the overlapping area OA.

In addition, as in the example illustrated in FIG. 1, the electrode tab unit may be aligned to overlap the electrode lead in such a manner that the electrode tab unit is positioned on the electrode lead, so as to apply the laser from above. Accordingly, laser energy may be applied to the electrode lead through the electrode tab unit. In addition, the electrode tabs may constitute a single tab bundle, and the single tab bundle may be positioned on the electrode lead.

When the tab bundle is directly irradiated with the laser in a state where the tab bundle is positioned on the electrode lead, contact surfaces between the ultra-thin electrode tabs constituting the tab bundle advantageously suppress heat conduction in an in-plane direction of the tab bundle.

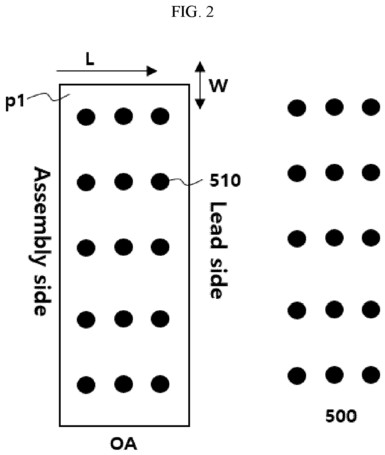

FIG. 2 illustrates an example of a welding pattern 500 in an overlapping area OA in a welding method according to an embodiment, in which the welding pattern 500 is illustrated based on an uppermost plane p1, an incident plane on which a laser is incident, of the electrode tab unit (or the tab bundle). In this case, in FIG. 2, an `assembly side' refers to a side adjacent to the electrode assembly in the overlapping area (OA), and a `lead side' refers to a side adjacent to the electrode lead that does not overlap the electrode tab unit in the overlapping area (OA). Hereinafter, concerning a welding pattern to be described below, when "spots" are used to specifically describe the pattern, the pattern will be described using its uppermost or lowermost plane in the overlapping area as a reference plane.

As in the example illustrated in FIG. 2, the welding pattern 500 may be a spot-type pattern (spot-type welding pattern) in which welding spots 510 are regularly spaced apart from each other on the reference plane, which is the uppermost or lowermost plane of the overlapping area OA.

At the time of welding between a tab bundle in which at least 40 ultra-thin electrode tabs each having a thickness of 15 µm or less are highly stacked (a large number of ultra-thin electrode tabs are brought into tight contact with each other) and an electrode lead, in order to prevent damage to the ultra-thin electrode tabs and to suppress a welding defect, it is advantageous to form a welding pattern with extremely fine welding spots. In the three-dimensional terms of the welding pattern, rather than being based on the uppermost or lowermost plane of the welding pattern as the reference plane, it is preferable that very fine thread-shaped welding beads penetrating through the overlapping area are regularly spaced apart from each other at the time of welding between the tab bundle in which the ultra-thin electrode tabs are highly stacked and the electrode lead.

In addition, as the welding spot size becomes extremely small, mechanical strength in the welding area and stable electrical connection between the electrode tab unit and the electrode lead can be secured by increasing the welding spot density. Furthermore, the extremely small welding spot size and the high welding spot density are advantageous because it is possible to prevent concentration of stress (at a boundary) between the welding area and the non-welding area of the electrode tab unit.

Thus, in an advantageous example, the welding pattern may be a pattern in which ultra-fine welding spots are spaced apart from each other at a high density.

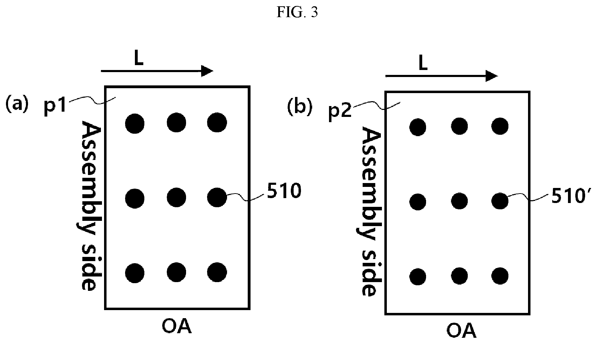

If the welding spot size is excessively reduced in order to suppress damage to the ultra-thin electrode tabs, there is a risk that welding may not be performed in a strong and stable manner. Thus, the welding spot (see 510 in FIG. 3) on the uppermost plane has a diameter of about 0.2 Ref to 1.5 Ref, preferably about 0.5 Ref to 1.2 Ref, Ref being a reference size value that is Ted x N where Ted is a thickness of an ultra-thin electrode tab and N is the number of electrodes constituting the electrode tab unit. However, when the number of electrode tabs constituting the electrode tab unit is very large and Ref has a value of 0.7 mm or more, the upper limit of the diameter of the welding spot is preferably fixed to 0.6 to 0.8 mm. As a practical example, in a case where the number of electrode tabs each having a thickness of several micrometers not greater than 15 micrometers is 40 or more, the diameter of the welding spot may be about 0.2 mm to 0.8 mm, particularly about 0.4 mm to 0.8 mm.

A welding spot on the lowermost plane (see 510' in FIG. 3) may have a diameter substantially similar to or slightly smaller than that on the uppermost plane. Specifically, the diameter D' of the welding spot 510' on the lowermost plane may be 0.5 D to 1 D, particularly 0.6 D to 0.9 D, D being a diameter of the welding spot on the uppermost plane. As a practical example, when the diameter D of the welding spot on the uppermost plane is about 0.2 mm to 0.8 mm, particularly about 0.4 mm to 0.8 mm, the diameter D' of the welding spot 510' on the lowermost plane is about 0.1 to 0.8 mm, particularly about 0.3 mm to 0.7 mm. The fine welding bead having the above-described reference sizes on the uppermost plane and the lowermost plane while penetrating through the electrode tab unit and the electrode lead is advantageous because it is possible to prevent a welding defect and minimize thermal damage caused by the welding process.

In the welding pattern, the welding spots may be spaced apart from each other in one direction or in two different directions. The welding spot density, which is defined by the number of welding spots per unit length in a direction in which the welding spots are spaced apart from each other, may be about 0.3 to 0.8 pieces/mm independently in each direction. In this case, the reciprocal number of the welding spot density may correspond to a distance between the closest welding spots spaced apart from each other in each direction (a distance between the centers of the welding spots spaced apart from each other).

As described above, the welding spots 510 may be regularly spaced apart from each other in one direction or in two or more different directions.

The welding spots 510 constituting the welding pattern 500 may have the same size or different sizes. In the example of FIG. 2, the welding pattern is formed with welding spots 510 having the same size.

A high-density (welding spot density) welding pattern in which ultra-fine welding spots are regularly spaced apart from each other is advantageous because it is possible to prevent damage to ultra-thin electrode tabs and stably bind the electrode tabs to an electrode lead, and because it is possible to suppress damage to a welded portion and a portion around the welded portion (e.g., a boundary between the welded portion and the non-welded portion in the electrode tab unit) caused by stress generated and accumulated inside the battery cell due to repetitive charging and discharging.

In an advantageous example, the welding pattern 500 may be a pattern in which the welding spots 510 are regularly spaced apart from in a length direction L (see FIG. 1) and in a width direction W, the length direction being a direction in which the electrode tabs protrude and the width direction being a direction perpendicular to the length direction, and it is preferable that a first welding spot density defined by the number of welding spots per unit length in the length direction L is greater than a second welding spot density defined by the number of welding spots per unit length in the width direction W. This is advantageous because it is possible to suppress damage to the electrode tab unit in which the ultra-thin electrode tabs are highly stacked, and bind the electrode lead and the electrode tabs to each other in a strong and firm manner, and because it is possible to improve mechanical properties in the welded portion.

In this case, the reciprocal number of the first welding spot density may correspond to a distance between welding spots closest to each other in the length direction (a distance between the centers of the welding spots), and the reciprocal number of the second welding spot density may correspond to a distance between welding spots closest to each other in the width direction (a distance between the centers of the welding spots).

The welding spot density greater in the length direction than in the width direction is advantageous because it is possible to prevent the risk of disconnection that may occur due to the weak tensile force that the ultra-thin foil itself has and to suppress disconnection that is likely to occur due to a weak welding force. In an embodiment, the first welding spot density may be 0.6 to 0.8 pieces/mm(spots/mm) or 0.65 to 0.8 pieces/mm(spots/mm), and the second welding spot density may be 0.3 to 0.5 pieces/mm(spots/mm) or 0.4 to 0.5 pieces/mm(spots/mm), but the first welding spot density and the second welding spot density are not necessarily limited thereto.

FIG. 3 illustrates another example of a welding pattern 500 in the overlapping area OA in the welding method according to an embodiment. FIG. 3A illustrates an example of a welding pattern 500 based on the uppermost plane p1, which is an incident plane of the electrode tab unit (or the tab bundle) on which a laser is incident, and FIG. 3B illustrates an example of a welding pattern 500 based on the lowermost plane p2, which is a plane opposite to the plane of the electrode lead contacting the electrode tab unit.

The welding spot 510 may be formed on the uppermost plane of the electrode tab unit by a welding bead in the form of a three-dimensionally thin thread straightly penetrating through the multilayered ultra-thin electrode tabs constituting the electrode tab unit and the electrode lead. As in the example illustrated in FIG. 3, the diameter of the welding spot 510 on the uppermost plane p1 may be equal to or greater than the diameter of the welding spot 510' on the lowermost plane P2. That is, the welding bead is commonly referred to as a welding spot based on a plane in the two-dimensional terms such as the uppermost plane or the lowermost plane, but in the three-dimensional terms, the welding bead may be in the form of a fine thread or a fine needle penetrating through the electrode tab unit and the electrode lead. As a practical example, the diameter D of the welding spot 510 on the uppermost plane may be about 0.2 mm to 0.8 mm, particularly about 0.4 mm to 0.8 mm, and the diameter D' of the welding spot 510' on the lowermost plane may be about 0.1 mm to 0.8 mm, particularly about 0.3 mm to 0.7 mm.

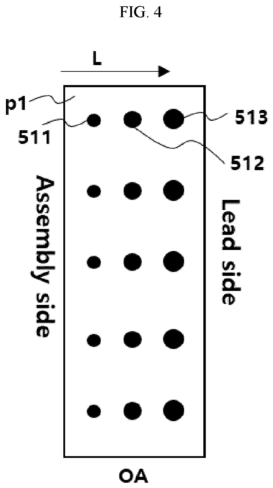

FIG. 4 illustrates another example of a welding pattern 500 in the overlapping area OA in the welding method according to an embodiment. As in the example illustrated in FIG. 4, welding spots 511 to 513 constituting the welding pattern 500 may have different sizes. Specifically, in the welding pattern, the welding spots may have different sizes in the length direction L, which is a direction in which the electrode tabs protrude from one side of the electrode assembly, and at least welding spots 511 located along an edge (an edge of the overlapping area) on the electrode assembly side may have a smaller size than the other welding spots 512 and 513.

Specifically, when n welding spots (n is a natural number of 2 or more, particularly a natural number of 2 to 10) are spaced apart from each other in the length direction L, D(1) < D(j) (j is a natural number of 2 to n) is satisfied, where D(1) denotes a diameter of a welding spot P1 positioned closest to the electrode assembly side and D(j) is a diameter of each of the sequential welding spots P(j). In this case, the welding spots other than P1 may have the same size or different sizes. If the welding spots other than P1 have different sizes, a diameter D(n) of a welding spot Pn positioned closest to the electrode lead side that does not overlap the electrode tab unit may be greater than diameters D(2) to D(n-1) of P2 to Pn-1.

In the example of FIG. 4, among three welding spots P1 (511), P2 (512), and P3 (513) spaced apart from each other in the length direction, P1 (511) has the smallest size, and P3 (513) has the largest size, while P2 (512) and P3 (513) have different sizes.

As in the example of FIG. 4, by forming the welding spots positioned closest to the electrode assembly side in the length direction to have the smallest size so as to have a relatively higher resistance and a relatively weaker mechanical strength than the other welding spots, even if the welded portion is damaged by stress generated and accumulated inside the battery cell, the stress can be preferentially absorbed and relieved by the welding spots positioned closest to the electrode assembly side to protect the welded portion (e.g., P2 and P3) ensuring electrical and mechanical coupling between the electrode tab unit and the electrode lead may be protected.

Any laser may be used as long as the laser irradiation forms welding spots having the pattern and sizes described above with reference to FIGS. 2 to 4. However, when the laser is a diode-pumped solid-state laser, the output of the laser may be controlled to at least 2000 W.

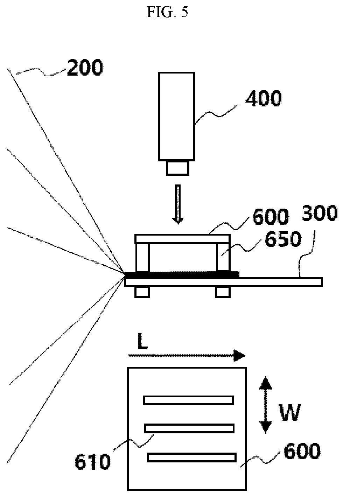

FIG. 5 illustrates another process diagram of a welding method according to an embodiment. As in the example of FIG. 5, a laser 400 may be applied from above in a state where a mask 600 with slits 610 formed therein is positioned above and spaced apart from the overlapping area OA. By the mask 600 in which the slits 610 are formed, metal being welded during a welding process can be prevented from being spattered into the air. The overlapping area may be irradiated with laser light after passing through the slits 610 of the mask 600. Therefore, the positions of the slits 610 in the mask 600 may correspond to the welded area where the welding spot pattern is formed in the overlapping area.

As in the example of FIG. 5, the mask 600 may include two or more slits. The length direction of the slit may be parallel to one (e.g., L) of the directions in which the welding spots are spaced apart from each other, and the direction in which the slits are spaced apart from each other may be parallel to the other one (e.g., W) of the directions in which the welding spots are spaced apart from each other. However, since the slits of the mask are through holes allowing laser light to pass through the mask to irradiate the overlapping area, the mask may be formed to have through holes having a pattern corresponding to the pattern of the welding spots at positions corresponding to the positions of the welding spots instead of the slits, and the through hole may be a simple modification of the slit.

In order to prevent spatter, the mask 600 may be spaced apart by a predetermined distance from and above the overlapping area through a support member 650. In this case, the support member 650 may be a pressure fixing member such as a jig that bundles the electrode tabs by bringing one end portions of the electrode tabs into tight contact with each other. In a case where the support member 650 is a pressure fixing member, the support member 650 may include a pressure fixing member on the electrode tab unit side and a pressure fixing member on the electrode lead side, through which the electrode tabs can be maintained in a tightly coupled state during the welding process, and at the same time, the tab bundle and the electrode lead can be maintained in a tightly coupled state.

An electrode assembly in which an electrode lead and an electrode tab unit are welded to each other by the above-described welding method is included.

A secondary battery (battery cell) including an electrode assembly coupled to an electrode lead by the above-described welding process is included. In this case, the secondary battery may be a lithium secondary battery, a sodium secondary battery, a magnesium secondary battery, a calcium secondary battery, or the like. As an example, the secondary battery may be a lithium secondary battery, but is not limited thereto.

The secondary battery includes: an electrode assembly in which electrodes and separators are stacked; an electrode tab unit including a plurality of electrode tabs protruding from one side or both sides of the electrode assembly, with end portions of the electrode tabs being tightly coupled to each other to form a tab bundle; an electrode lead connected to the electrode tab unit by laser welding; and a battery case, wherein each of the electrode tabs belonging to the electrode tab unit is an ultra-thin electrode tab having a thickness of 15 µm or less, and the number of electrode tabs tightly coupled to each other in the tab bundle is at least 40.

In an embodiment, a thickness of each of the electrode tabs belonging to the electrode tab unit may be 15 µm or less, 13 µm or less, 10 µm or less, 9 µm or less, 8 µm or less, 7 µm or less, or 6 µm or less, and may be substantially 5 µm or more.

In an embodiment, the number of electrodes of one polarity constituting the electrode assembly may be 40 or more, 50 or more, 60 or more, 70 or more, 80 or more, 90 or more, 100 or more, 110 or more, or 120 or more, and may be substantially 200 or less, but is not limited thereto. In this case, the number of electrodes of one polarity may correspond to the number of electrode tabs (electrode tabs having the same polarity) belonging to the electrode tab unit. In addition, as the electrode assembly has a structure in which electrodes and separators are stacked in such a manner that electrodes having different polarities face each other with a separator interposed therebetween, the number of electrodes of one polarity constituting the electrode assembly may correspond to the number of electrodes of the other polarity constituting the electrode assembly.

The connection between the electrode tab unit and the electrode lead may be made by a welding pattern formed by laser welding in an overlapping area where the electrode tab unit and the electrode lead overlap each other. The welding pattern may be a spot-type pattern in which welding spots are regularly spaced apart from each other on an uppermost plane, which is a laser incident plane of the overlapping area, and advantageously may be a spot-type pattern (welding pattern) in which ultra-fine welding spots are spaced apart from each other at a high density.

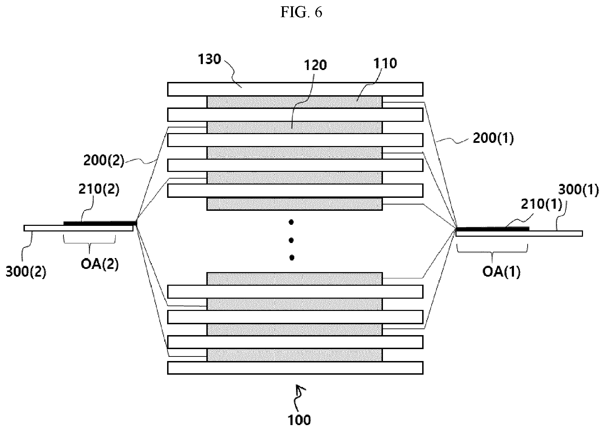

FIG. 6 illustrates an example of a cross section of an electrode assembly including an electrode lead connected through the electrode tab unit in the secondary battery according to an embodiment. Similarly to FIG. 1, FIG. 6 illustrates for clarity of illustration that an electrode tab appears to be drawn out from the center of the electrode (the center in the thickness direction), but the electrode tab may be formed by cutting an uncoated portion of the electrode or extending from the uncoated portion. In an electrode assembly 100, electrode tabs 200(1) and 200(2) may protrude in different directions or in the same direction and at different positions for electrodes 110 and 120 having different polarities respectively. In the example of FIG. 6, electrode tabs having one polarity (e.g., positive electrode tabs 200(1)) and electrode tabs having another polarity (e.g., negative electrode taps 200(2)) face each other with the electrode assembly 100 interposed therebetween. For the respective polarities of the electrodes, tab bundles 210(1) and 210(2) may be formed by tightly coupling end portions of electrode tabs having the same polarity to each other. The tab bundles 210(1) and 210(2) may overlap respective electrode leads 300(1) and 300(2) for the corresponding polarities to form overlapping areas OA(1) and OA(2), and a welding pattern connecting the electrode tabs (tab bundle) having the same polarity to the electrode lead may be formed in each of the overlapping areas OA(1) and OA(2).

The welding patterns formed in the respective overlapping areas may be different from or identical to each other.

The welding pattern formed in each of the overlapping areas may be a spot-type pattern (spot-type welding pattern) in which welding spots are regularly spaced apart from each other, with a plane on which a laser is incident in the overlapping area as the uppermost plane, and may be a pattern in which ultra-fine welding spots are formed at a high density.

As a practical example, the welding spots on the uppermost plane may have a diameter of about 0.2 mm to 0.8 mm, particularly about 0.4 mm to 0.8 mm, and the welding spots on the lowermost plane, which is an opposite plane of the uppermost plane in the overlapping area, may have a diameter D' of about 0.1 to 0.8 mm, particularly about 0.3 mm to 0.7 mm.

In the welding pattern based on the uppermost plane, the welding spots may be spaced apart from each other in one direction or in two different directions. The welding spot density, which is defined by the number of welding spots per unit length in the direction in which the welding spots are spaced apart from each other, may be about 0.3 to 0.8 pieces/mm independently in each direction.

In an advantageous example, in the welding pattern, a first welding spot density defined by the number of welding spots per unit length in the length direction L is greater than a second welding spot density defined by the number of welding spots per unit length in the width direction W, the length direction L being a direction in which the electrode tabs protrude and the width direction W being a direction perpendicular to the length direction.

The welding spot density greater in the length direction than in the width direction is advantageous because it is possible to prevent the risk of disconnection that may occur due to the weak tensile force that the ultra-thin foil itself has and to suppress disconnection that is likely to occur due to a weak welding force. In an embodiment, the first welding spot density may be 0.6 to 0.8 pieces/mm or 0.65 to 0.8 pieces/mm, and the second welding spot density may be 0.3 to 0.5 pieces/mm or 0.4 to 0.5 pieces/mm, but the first welding spot density and the second welding spot density are not necessarily limited thereto.

The electrode assembly, the electrode tabs, the electrode tab unit, the electrode lead, the overlapping area, the welding pattern (spot-type pattern), etc. in the secondary battery according to an embodiment are substantially similar to or identical to the electrode assembly, the electrode tabs, the electrode tab unit, the tab bundle, the electrode lead, the overlapping area, the welding pattern (spot-type pattern), etc. described above for the electrode tab welding method. Therefore, the secondary battery according to an embodiment includes all of what have been described above for the electrode tab welding method.

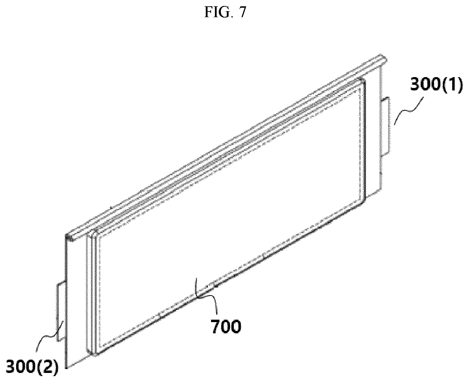

FIG. 7 illustrates a perspective view of the secondary battery according to an embodiment. As in the example illustrated in FIG. 7, the electrode assembly connected to the electrode leads through the electrode tab unit may be sealed inside a battery case 700 together with an electrolyte. In this case, one end portions of the electrode leads 300(1) and 300(2) for the respective polarities may protrude out of the battery case 700 to provide a path for electrical connection with the outside of the battery.

## Claims

1. An electrode tab welding method comprising:
aligning one end portion of an electrode tab unit including a plurality of electrode tabs protruding from one side or both sides of an electrode assembly in which electrodes and separators are stacked to overlap one end portion of an electrode lead; and
irradiating an overlapping area where the electrode tab unit and the electrode lead overlap each other with a laser for welding,
wherein each of the electrode tabs belonging to the electrode tab unit is an ultra-thin electrode tab having a thickness of 15 µm or less, and the number of electrode tabs stacked in one direction in the electrode tab unit is at least 40.

2. The electrode tab welding method of claim 1, wherein the laser is a diode-pumped solid-state laser.

3. The electrode tab welding method according to any one of claims 1 to 2, wherein the overlapping area is irradiated with the laser to form a welding pattern in which welding spots are regularly spaced apart from each other on an uppermost plane that is a laser incident plane of the overlapping area.

4. The electrode tab welding method of claim 3, wherein in the welding pattern, a first welding spot density defined by the number of welding spots per unit length in a length direction is greater than a second welding spot density defined by the number of welding spots per unit length in a width direction, the length direction being a direction in which the electrode tabs protrude and the width direction being a direction perpendicular to the length direction.

5. The electrode tab welding method of claim 4, wherein the first welding spot density is 0.6 to 0.8 pieces/mm, and the second welding spot density is 0.3 to 0.5 pieces/mm.

6. The electrode tab welding method according to any one of claims 3 to 5, wherein each of the welding spots has a diameter of 0.2 mm to 0.8 mm on the uppermost plane, and has a diameter of 0.1 to 0.8 mm on a lowermost plane that is an opposite plane of the uppermost plane in the overlapping area.

7. The electrode tab welding method of according to any one of claims 3 to 6, wherein the electrode tab unit overlaps the electrode lead in such a manner that the electrode tab unit is positioned on the electrode lead, so as to apply the laser from above.

8. The electrode tab welding method of according to any one of claims 3 to 7, wherein a mask with slits formed therein is positioned above and spaced apart from the overlapping area, so as to apply the laser from above.

9. The electrode tab welding method according to any one of claims 1 to 8, wherein the electrode tabs and the electrode lead are each independently copper or aluminum.

10. A secondary battery comprising:
an electrode assembly in which electrodes and separators are stacked;
an electrode tab unit including a plurality of electrode tabs protruding from one side or both sides of the electrode assembly, with end portions of the electrode tabs being tightly coupled to each other to form a tab bundle;
an electrode lead connected to the electrode tab unit by laser welding; and
a battery case,
wherein each of the electrode tabs belonging to the electrode tab unit is an ultra-thin electrode tab having a thickness of 15 µm or less, and the number of electrode tabs tightly coupled to each other in the tab bundle is at least 40.

11. The secondary battery of claim 10, wherein the connection between the electrode tab unit and the electrode lead is made by a welding pattern formed by laser welding in an overlapping area where the electrode tab unit and the electrode lead overlap each other, and the welding pattern is a spot-type pattern in which welding spots are regularly spaced apart from each other on an uppermost plane that is a laser incident plane of the overlapping area.

12. The secondary battery of claim 11, wherein in the welding pattern, a first welding spot density defined by the number of welding spots per unit length in a length direction is greater than a second welding spot density defined by the number of welding spots per unit length in a width direction, the length direction being a direction in which the electrode tabs protrude and the width direction being a direction perpendicular to the length direction.

13. The secondary battery of claim 12, wherein the first welding spot density is 0.6 to 0.8 pieces/mm, and the second welding spot density is 0.3 to 0.5 pieces/mm.

14. The secondary battery according to any one of claims 11 to 13, wherein each of the welding spots has a diameter of 0.2 mm to 0.8 mm on the uppermost plane, and has a diameter of 0.1 to 0.8 mm on a lowermost plane that is an opposite plane of the uppermost plane in the overlapping area.

15. The secondary battery according to any one of claims 10 to 14, wherein the electrode lead is positioned under the electrode tab unit in the overlapping area, so as to apply a laser from above.
